# EUROPEAN PATENT APPLICATION

(11) **EP 3 500 001 A1**
(43) Date of publication of application: **19.06.2019**
(21) Application number: 16917143.6
(22) Date of filing: 28.09.2016
(51) Int. Cl.: H04W 72/04

(54) **SOUNDING REFERENCE SIGNAL TRANSMISSION METHOD, TERMINAL DEVICE, AND NETWORK DEVICE**

(71) Applicant: Huawei Technologies Co., Ltd., Longgang District Shenzhen, Guangdong 518129 (CN)
(72) Inventor: SU, Liyan, Shenzhen Guangdong 518129 (CN); LI, Chaojun, Shenzhen Guangdong 518129 (CN); SHAO, Jiafeng, Shenzhen Guangdong 518129 (CN); MA, Sha, Shenzhen Guangdong 518129 (CN)
(74) Representative: Gill Jennings & Every LLP
(86) International application number: PCT/CN2016/100678
(87) International publication number: WO 2018/058389

(57) **Abstract**

The present invention provides a method, a terminal device, and a network device for transmitting a sounding reference signal. The method includes: receiving, by a terminal device, control signaling in a first time interval TI, where the control signaling is used to instruct the terminal device to send an SRS; after receiving the control signaling, determining, by the terminal device, a target sending time period from at least one sending time period, where the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, where 0<P≤4; and sending, by the terminal device, the SRS in the target sending time period. Therefore, interval duration between a moment at which the terminal device receives the control signaling and a moment of completing preparation of information necessary for sending the SRS is decreased, and a system latency is shortened effectively.

## Description

### TECHNICAL FIELD

The present invention relates to the communications field, and in particular, to a method and network device for transmitting a sounding reference signal, and a terminal device in the communications field.

### BACKGROUND

In a Long Term Evolution (Long Term Evolution, "LTE" for short) system, a base station needs a terminal device to send a sounding reference signal (sounding reference signal, "SRS" for short), so that the base station can perform uplink channel information estimation based on the SRS, so as to further implement correct scheduling of the terminal device. At present, there is a known aperiodic SRS transmission technology, that is, a base station instructs, using control signaling, a terminal device to transmit an SRS. This special control signaling is also referred to as an SRS request. After receiving the control signaling, the terminal device sends the SRS according to an SRS trigger criterion. However, the trigger criterion stipulates that a subframe in which the terminal device sends the SRS is at least four subframes apart from a subframe in which the SRS request is detected. In other words, after receiving the control signaling, the terminal device can send the SRS only after 4 ms. In this way, interval duration between a moment at which the terminal device receives the control signaling and a moment of sending the SRS exceeds 4 ms, and it is difficult to meet a communications service that has a low-latency requirement. Therefore, how to reduce a latency, so that an aperiodic SRS can be quickly responded and sent is a problem that needs to be resolved urgently in the industry.

### SUMMARY

The present invention provides a method, a terminal device, and a network device for transmitting a sounding reference signal, so as to effectively decrease interval duration between a moment at which a terminal device receives control signaling and a moment of sending an SRS, and better meet a communications service that has a low-latency requirement.

According to a first aspect, a method for transmitting a sounding reference signal SRS is provided, and is applied to a communications system on which at least one sending time period is configured in time domain. The sending time period is a time period used to transmit a sounding reference signal SRS. The method includes: receiving, by a terminal device, control signaling in a first time interval TI, where the control signaling is used to instruct the terminal device to send the SRS; after receiving the control signaling, determining, by the terminal device, a target sending time period from the at least one sending time period, where the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, where 0<P≤4; and sending, by the terminal device, the SRS in the target sending time period.

Therefore, according to the method for transmitting a sounding reference signal in this embodiment of the present invention, interval duration between a moment at which the terminal device receives the control signaling and a moment of completing preparation of information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

With reference to the first aspect, in a first implementation of the first aspect, the first moment belongs to a second TI. There is an interval of L TIs between the start moment of the first TI and a start moment of the second TI. L is an integer greater than or equal to 0. L is a predefined value, or L is configured using signaling.

With reference to the first aspect, in a second implementation of the first aspect, the first TI includes M symbols, and the second TI includes N symbols, where 1≤M≤7, 1≤N≤7, M≤N, and M and N are positive integers.

Therefore, using an sTTI, a system latency may be decreased more effectively; in addition, the terminal device can receive the control signaling for a plurality of times in one subframe, thereby improving system flexibility.

With reference to the first aspect, in a third implementation of the first aspect, there is an interval of K symbols between the first moment and a start moment of the symbol to carry the control signaling and that is in the first TI. K is a positive integer greater than or equal to 1, and K is a predefined value, or K is configured using signaling.

With reference to the first aspect, in a fourth implementation of the first aspect, the control signaling is carried on the first symbol of the first TI.

According to a second aspect, a method for transmitting a sounding reference signal SRS is provided, and is applied to a communications system on which at least one sending time period is configured in time domain. The sending time period is a time period used to transmit a sounding reference signal SRS. The method includes: sending, by a network device, control signaling in a first time interval TI, where the control signaling is used to instruct a terminal device to send the SRS; after sending the control signaling, receiving, by the network device, the SRS in a target sending time period, where the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, where 0<P≤4.

Therefore, according to the method for transmitting a sounding reference signal in this embodiment of the present invention, interval duration between a moment at which the terminal device receives the control signaling and a moment of completing preparation of information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

With reference to the second aspect, in a first implementation of the second aspect, the first moment belongs to a second TI. There is an interval of L TIs between a start moment of the second TI and the start moment of the first TI. L is an integer greater than or equal to 0. L is a predefined value, or L is configured using signaling.

With reference to the second aspect, in a second implementation of the second aspect, the first TI includes M symbols, and the second TI includes N symbols, where 1≤M≤7, 1≤N≤7, M≤N, and M and N are positive integers.

Therefore, using a short transmission time interval sTTI whose transmission time is relatively short, a system latency is decreased more effectively; in addition, the network device can send the control signaling for a plurality of times in one subframe, thereby improving system flexibility.

With reference to the second aspect, in a third implementation of the second aspect, there is an interval of K symbols between the first moment and a start moment of the symbol to carry the control signaling and that is in the first TI. K is a positive integer greater than or equal to 1, and K is a predefined value, or K is configured using signaling.

With reference to the second aspect, in a fourth implementation of the second aspect, the control signaling is carried on the first symbol of the first TI.

According to a third aspect, a terminal device is provided. The terminal device may perform the method in the first aspect or any possible implementation of the first aspect. Specifically, the terminal device may include a module unit configured to perform the method in the first aspect or any possible implementation of the first aspect.

According to a fourth aspect, a network device is provided. The network device may perform the method in the second aspect or any possible implementation of the second aspect. Specifically, the network device may include a module unit configured to perform the method in the second aspect or any possible implementation of the second aspect.

According to a fifth aspect, a terminal device is provided. The terminal device includes: a bus, a processor connected to the bus, a memory connected to the bus, and a transceiver connected to the bus. The memory is configured to store an instruction. The processor is configured to execute the instruction stored in the memory, to control the transceiver to receive a signal or send a signal. In addition, when the processor executes the instruction stored in the memory, the processor performs the method in the first aspect or any possible implementation of the first aspect.

According to a sixth aspect, a network device is provided. The network device includes: a bus, a processor connected to the bus, a memory connected to the bus, and a transceiver connected to the bus. The memory is configured to store an instruction. The processor is configured to execute the instruction stored in the memory, to control the transceiver to receive a signal or send a signal. In addition, when the processor executes the instruction stored in the memory, the processor performs the method in the second aspect or any possible implementation of the second aspect.

According to a seventh aspect, a computer storage medium is provided. The computer storage medium stores program code, and the program code is used to instruct to perform the method in the first aspect or any possible implementation of the first aspect.

According to an eighth aspect, a computer storage medium is provided. The computer storage medium stores program code, and the program code is used to instruct to perform the method in the second aspect or any possible implementation of the second aspect.

With reference to the implementations of the foregoing aspects, in some implementations, a value of M is any one of the following: 2 or 3, and a value of N is any one of the following: 2, 3, 4, or 7.

With reference to the implementations of the foregoing aspects, in some implementations, the signaling is high-layer signaling or physical layer signaling.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an application scenario of a method, for transmitting a sounding reference signal, applicable to an embodiment of the present invention;
FIG. 2a to FIG. 2f are schematic diagrams of time interval structures, for transmitting a sounding reference signal, applicable to an embodiment of the present invention;
FIG. 3 is a schematic interaction diagram of a method for transmitting a sounding reference signal according to an embodiment of the present invention;
FIG. 4a to FIG. 4d are schematic diagrams of configuration manners of a sounding reference signal in time domain according to an embodiment of the present invention;
FIG. 5 is a schematic block diagram of a terminal device according to an embodiment of the present invention;
FIG. 6 is a schematic block diagram of a network device according to an embodiment of the present invention;
FIG. 7 is a schematic structural diagram of a terminal device according to an embodiment of the present invention; and
FIG. 8 is a schematic structural diagram of a network device according to an embodiment of the present invention.

### DESCRIPTION OF EMBODIMENTS

The following clearly and completely describes the technical solutions in embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

The present invention describes each embodiment with reference to a network device. The network device may be a device that communicates with a terminal device, for example, a base station or a base station controller. Each network device may provide communication coverage for a specific geographic area, and may communicate with a terminal device (for example, UE) in the coverage area (cell). The network device may be a base transceiver station (Base Transceiver Station, "BTS" for short) in a GSM system or a CDMA system, or may be a NodeB (NodeB, "NB" for short) in a WCDMA system, or may be an evolved NodeB (Evolved NodeB, "eNB" or "eNodeB" for short) in an LTE system, or a radio controller in a cloud radio access network (Cloud Radio Access Network, "CRAN" for short), or the network device may be a network device in a future 5G network or a network device in a future evolved public land mobile network (Public Land Mobile Network, "PLMN" for short), or the like.

In addition, the present invention describes each embodiment with reference to a terminal device. The terminal device may be an access terminal, user equipment (User Equipment, "UE" for short), a subscriber unit, a subscriber station, a mobile station, a mobile console, a remote station, a remote terminal, a mobile terminal, a user terminal, a terminal, radio communications equipment, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in the Internet of Things, a virtual reality device, a terminal device in a future 5G network, a terminal device in a future evolved public land mobile network (Public Land Mobile Network, "PLMN" for short), or the like.

Optionally, the network device may be a base station, and the terminal device may be user equipment.

A method and an apparatus for transmitting a sounding reference signal provided in the embodiments of the present invention may be applied to the terminal device or the network device. The terminal device or the network device includes a hardware layer, an operating system layer running at the hardware layer, and an application layer running at the operating system layer. The hardware layer includes hardware such as a central processing unit (Central Processing Unit, CPU), a memory management unit (MMU, Memory Management Unit), and a memory (also referred to as a main memory). The operating system may be any one or more of computer operating systems that implement service processing using a process (Process), for example, a Linux operating system, a Unix operating system, an Android operating system, an iOS operating system, or a Windows operating system. The application layer includes applications such as a browser, an address book, word processing software, and instant messaging software. In addition, in the embodiments of the present invention, a specific structure of an entity for performing the method for transmitting a sounding reference signal is not specially limited in the present invention, provided that a program recording code of the method for transmitting a signal in the embodiments of the present invention can be run to perform communication based on the method for transmitting a signal in the embodiments of the present invention. For example, the entity for performing a method for transmitting a sounding reference signal in the embodiments of the present invention may be the terminal device or the network device, or a functional module that is in the terminal device or the network device and that can invoke a program and execute the program.

In addition, aspects or features of the present invention may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (Compact Disc, CD), a digital versatile disc (Digital Versatile Disc, DVD)), a smart card and a flash memory component (for example, erasable programmable read-only memory (Erasable Programmable Read-Only Memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain and/or carry an instruction and/or data.

It should be understood that technical solutions in the embodiments of the present invention may be applied to an LTE or LTE-A system. As an example instead of a limitation, any wireless communications system that performs data transmission through scheduling is applicable to the embodiments of the present invention. To better understand the present invention, an LTE system is used as an example to describe the embodiments of the present invention.

It should be understood that, in the LTE system, each radio frame includes 10 subframes, a length of each subframe is 1 ms, and subframe numbers range from 0 to 9. Subframe n-a is an a^{th} subframe previous to subframe n, that is, subframe n-a is the a^{th} subframe counted forward starting from subframe n. For example, if n=4, and a=2, subframe n-a is subframe 2 in a radio frame in which subframe n exists. For another example, if n=0, and a=2, subframe n-a is subframe 8 in a previous radio frame of a radio frame in which subframe n exists. Subframe n+a is an a^{th} subframe after subframe n, that is, subframe n+a is the a^{th} subframe counted backward starting from subframe n. For example, if n=4, and a=3, subframe n+a is subframe 7 in a radio frame in which subframe n exists. For another example, if n=8, and a=2, subframe n+a is subframe 0 in a next radio frame of a radio frame in which subframe n exists.

It should be understood that an uplink symbol is referred to as a single carrier frequency division multiple access (single carrier frequency division multiple access, "SC-FDMA" for short) symbol, and a downlink symbol is referred to as an orthogonal frequency division multiple access (Orthogonal Frequency Division Multiple Access, "OFDMA" for short) symbol. It should be noted that if an uplink multi-access mode of OFDMA is introduced in a subsequent technology, the uplink symbol may also be referred to as an OFDMA symbol. In the embodiments of the present invention, both the uplink symbol and the downlink symbol are collectively referred to symbols, or may be symbols of communication of another type. This is not limited in the embodiments of the present invention.

It should be understood that a quantity of symbols included in each slot is related to a length of a cyclic prefix (cyclic prefix, "CP" for short) in a subframe. If the CP is a normal CP, each slot includes seven symbols, and each subframe includes 14 symbols, that is, each subframe includes symbols whose numbers are #0, #1, #2, #3, #4, #5, #6, #7, #8, #9, #10, #11, #12, and #13. If the CP is an extended CP, each slot includes six symbols, and each subframe includes 12 symbols, that is, each subframe includes symbols whose numbers are #0, #1, #2, #3, #4, #5, #6, #7, #8, #9, #10, and #11.

It should be further understood that in an existing LTE system, physical channels are designed based on a transmission time interval (Transmission Time Interval, "TTI" for short) length of 1 ms. In other words, one TTI length is equal to one subframe or 1 ms.

It should be noted that although the TTI length is 1 ms, a time domain resource occupied for data transmission may be less than 1 ms. For example, the first one, two, three, or four symbols in one downlink subframe may be used to transmit a PDCCH. Therefore, a time domain resource occupied for downlink data transmission with a TTI length of 1 ms may be less than 1 ms. For another example, the last symbol in one uplink subframe may be used to transmit an SRS. Therefore, a time domain resource occupied for uplink data transmission with a TTI length of 1 ms may also be less than 1 ms.

In a wireless communications system, a latency is one of important factors affecting user experience. Constantly emerging new services, for example, services related to the Internet of Vehicles, impose an increasingly high requirement on the latency. Therefore, for the existing LTE system, a transmission mechanism based on a TTI of one subframe already cannot meet a requirement of a low latency service. Therefore, an sTTI-based transmission mechanism emerges accordingly and can effectively reduce time of packet assembly and code demodulation, so as to achieve a purpose of reducing a physical layer air interface latency.

As described above, sTTI-based transmission refers to transmission with a TTI less than one subframe or 1 ms. For example, an sTTI length is one of lengths of one, two, three, four, five, six, and seven symbols; or an sTTI length is a combination of at least two different symbol lengths in the various symbol lengths. For example, 1 ms includes four sTTIs whose lengths are respectively a length of four symbols, a length of three symbols, a length of four symbols, and a length of three symbols; for another example, lengths are respectively a length of three symbols, a length of four symbols, a length of three symbols, and a length of four symbols, or another combination. A plurality of sTTIs may exist in a system. For example, the system supports, within 1 ms, transmission with an sTTI length of seven symbols and an sTTI length of 0.25 ms.

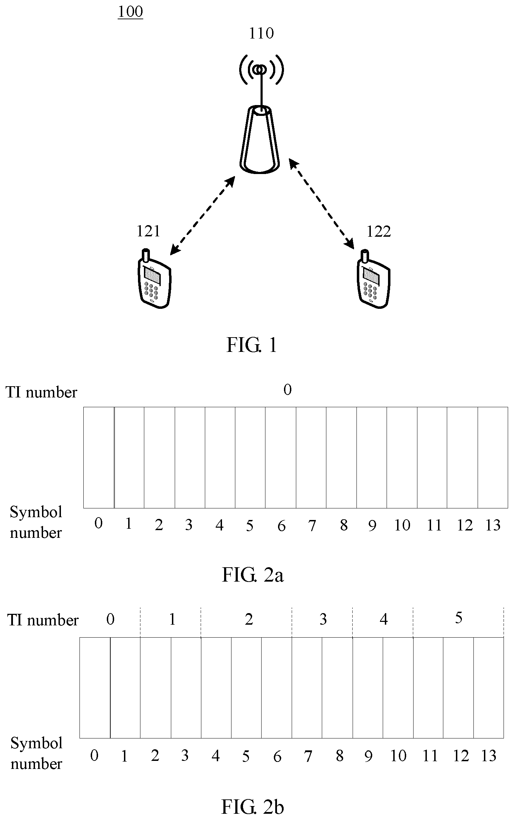

FIG. 1 shows an application scenario of a method for transmitting a sounding reference signal according to an embodiment of the present invention. As shown in FIG. 1, the application scenario includes a network device 110, and a terminal device 121 and a terminal device 122 that are located in a coverage area of the network device 110 and that communicate with the network device 110. Both the network device 110 and the terminal device 121 are devices that support sTTI-based transmission. The terminal device 122 is a device that supports 1 ms TTI-based transmission. The network device 110 may separately use an sTTI or a 1 ms TTI in the prior art to communicate with the terminal device 121. The network device 110 may also use the 1 ms TTI in the prior art to communicate with the terminal device 122.

It should be noted that in consideration of backward compatibility, 1 ms TTI-based transmission and sTTI-based transmission may coexist in a system. In addition, this embodiment of the present invention may be applied not only to TTI-based transmission, but also to sTTI-based transmission. Therefore, for ease of description of the embodiments of the present invention, a TTI and an sTTI are collectively referred to as a time interval (Time Interval, "TI" for short). In other words, the following uses the TI to describe in detail the embodiments of the present invention.

To facilitate understanding of the present invention, the following describes in detail TI structures in the embodiments of the present invention. As shown in FIG. 2a to FIG. 2f, schematic diagrams of TI structures, for transmitting a sounding reference signal, applicable to an embodiment of the present invention are described.

### TI structure 1

As shown in FIG. 2a, 1 ms TTI in an LTE system, namely, a TI length of 1 ms, is denoted as TI0, including symbols {#0, #1, #2, #3, #4, #5, #6, #7, #8, #9, #10, #11, #12, #13}.

### TI structure 2

As shown in FIG. 2b, 1 ms is divided into six TIs, that is, each TI length is a length of two or three symbols. As shown in the figure, TI0 includes symbols {#0, # 1}, TI1 includes symbols {#2, #3}, TI2 includes symbols {#4, #5, #6}, TI3 includes symbols {#7, #8}, TI4 includes symbols {#9, #10}, and TI5 includes symbols {#11, #12, #13}.

### TI structure 3

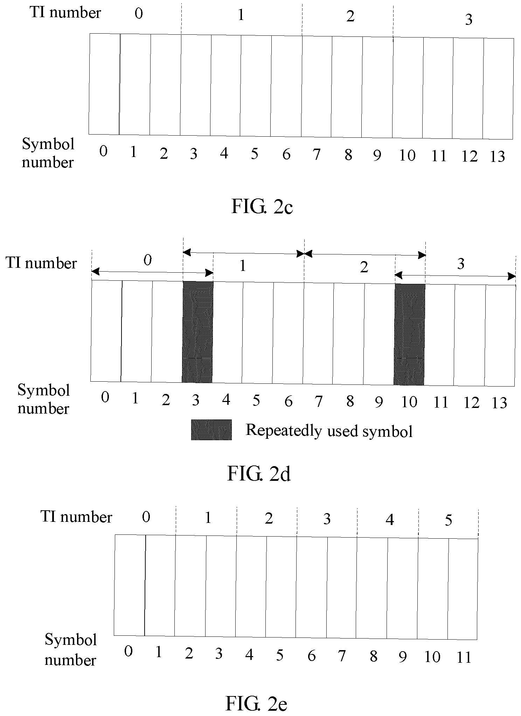

As shown in FIG. 2c, 1 ms is divided into four TIs, that is, TI lengths are respectively a length of three symbols, a length of four symbols, a length of three symbols, and a length of four symbols, and are denoted as follows: TI0 includes symbols {#0, # 1, # 2}, TI1 includes symbols {#3, #4, #5, #6}, TI2 includes symbols {#7, #8, #9}, and TI3 includes symbols {#10, #11, #12, #13}.

### TI structure 4

As shown in FIG. 2d, 1 ms is divided into four TIs, that is, TI lengths are a length of four symbols, which are denoted as follows: TI0 includes symbols {#0, #1, #2, #3}, TI1 includes symbols {#3, #4, #5, #6}, TI2 includes symbols {#7, #8, #9, #10}, and TI3 includes symbols {#10, #11, #12, #13}. A difference between the TI structure 4 and the TI structure 2 and the TI structure 3 lies in that the TI structure has repeatedly used symbols. A reason for this TI structure is that some special information can be sent at the same time, and the information does not interfere with each other, for example, comb orthogonal or code orthogonal demodulation reference signals.

The foregoing TI structures are set based on a normal CP in a subframe. The following describes TI structures set based on an extended CP in the subframe.

### TI structure 5

As shown in FIG. 2e, 1 ms is divided into six TIs, that is, each TI length is a length of two symbols, which is denoted as follows: TI0 includes symbols {#0, #1}, TI1 includes symbols {#2, #3}, TI2 includes symbols {#4, #5}, TI3 includes symbols {#6, #7}, TI4 includes symbols {#8, #9}, and TI5 includes symbols {#10, #11}.

### TI structure 6

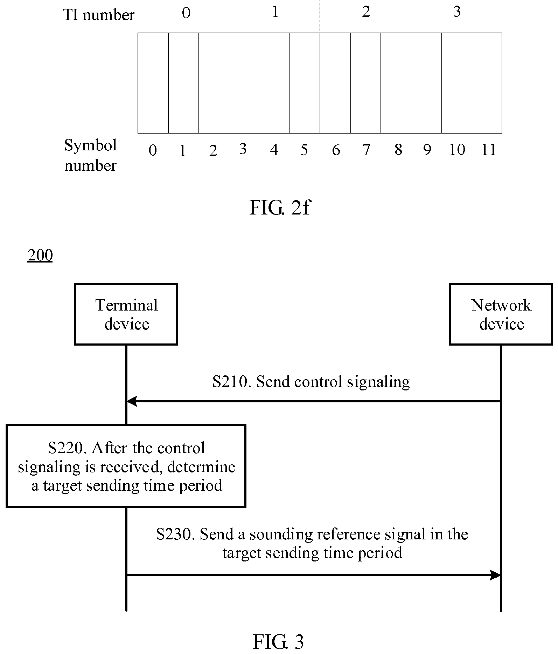

As shown in FIG. 2f, 1 ms is divided into four TIs, that is, each TI length is a length of three symbols, which is denoted as follows: TI0 includes symbols {#0, #1, #2}, TI1 includes symbols {#3, #4, #5}, TI2 includes symbols {#6, #7, #8}, and TI3 includes symbols {#9, #10, #11}.

It should be noted that if each subframe includes x TIs, TI numbers range from 0 to (x-1). TI s-a is an a^{th} TI previous to TI s. In other words, TI s-a is the a^{th} TI counted forward starting from TI s. For example, if s=4, a=2, and x=6, TI s-a is TI2 in a subframe in which TI s exists. For another example, if s=0, a=2, and x=6, TI s-a is TI4 in a previous subframe of a subframe in which TI s exists. TI s+a is an a^{th} TI after TI s, that is, TI s+a is the a^{th} TI counted backward starting from TI s. For example, if s=1, a=3, and x=6, TI s+a is TI4 in a subframe in which TI s exists. For another example, if s=5, a=2, and x=6, TI s+a is TI1 in a next subframe of a subframe in which TI s exists.

It should be understood that as an example instead of a limitation, any form of TI structures divided based on a subframe in the system may be applied to the embodiment of the present invention, and the present invention is not limited thereto.

The embodiment of the present invention is applied to a communications system on which at least one sending time period is configured in time domain. The sending time period is a time period used to transmit a sounding reference signal SRS.

Specifically, in this embodiment of the present invention, for aperiodic SRS transmission, each sending time period may be duration corresponding to at least one symbol; in other words, a terminal device sends an SRS on the at least one symbol. Alternatively, each sending time period may be a TI in which the at least one symbol exists.

It should be noted that a sending time period may be configured by a network device for the terminal device using high-layer signaling. In this way, the terminal device can send the SRS only in the sending time period, and cannot send the SRS in another time period.

Optionally, each sending time period in a plurality of sending time periods is on the last symbol of a TI in which the SRS can be sent.

It should be understood that each sending time period may be periodically configured by the network device. For example, in the prior art, the network device may configure a period of five subframes, subframe 2 in each period is used to send the SRS, and the terminal device cannot send the SRS in another subframe. Each sending time period may alternatively be configured by the network device in a fixed manner, that is, the terminal device needs to send the SRS in a subframe used to send the SRS.

Optionally, the terminal device may send the SRS on the last symbol in a subframe used to send the SRS. As an example instead of a limitation, the terminal device may alternatively send the SRS on another symbol in the subframe used to send the SRS.

It should be understood that in the following described embodiments, "first" and "second" are intended to merely distinguish between different objects, for example, to distinguish between different TIs, and do not impose any limitation on the protection scope of the embodiments of the present invention.

To better describe the embodiments of the present invention in detail, FIG. 3 is a schematic interaction diagram of a method for transmitting a sounding reference signal according to an embodiment of the present invention, from a perspective of device interaction. Interaction objects may be a network device and a terminal device.

The method includes the following steps.

In S210, the network device sends control signaling in a first time interval TI, where the control signaling is used to instruct the terminal device to send the SRS.

It should be noted that before scheduling uplink data transmission for the terminal device, the network device needs to estimate uplink channel information. Based on this, the terminal device needs to send the SRS to the network device, so that the network device can obtain in time channel information required for scheduling. Therefore, for aperiodic SRS transmission, the network device needs to send the control signaling to the terminal device. The control signaling is used to notify the terminal device that the terminal device needs to send the SRS to the network device.

Therefore, in S210, the terminal device may receive the control signaling in TI#1 (namely, an example of the first TI), and further configure the SRS, so that the terminal device can correctly send the SRS.

In S220, after receiving the control signaling, the terminal device determines a target sending time period from at least one sending time period, where the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, where 0<P≤4.

It should be understood that a value of P may be determined by the network device based on factors such as a capability of demodulating the control signaling by the terminal device, and an uplink/downlink switching capability.

As described above, after receiving and correctly demodulating the control signaling, the terminal device needs to send the SRS. It should be noted that before sending the SRS, the terminal device needs to prepare information necessary for sending the SRS. For example, the terminal device generates an SRS sequence, and calculates frequency domain in which the SRS is to be sent. The terminal device may send the SRS after all information is prepared. Therefore, in this embodiment of the present invention, moment #1 (namely, an example of the first moment) may be a moment at which the terminal device completes the information necessary for sending the SRS. As an example instead of a limitation, moment #1 may alternatively be any moment between a moment at which the terminal device completes the information necessary for sending the SRS and the first sending time period.

In the prior art, an SRS trigger criterion stipulates that a subframe in which the terminal device sends an SRS is at least four subframes apart from a subframe in which an SRS request is detected. In other words, interval duration between an end moment of a TI in which a moment of receiving the control signaling by the terminal device is located and an end moment of a TI in which a moment of completing preparation of the information necessary for sending the SRS is located is 4 ms. That is, if the terminal device receives the control signaling in subframe n, the terminal device needs to complete, in subframe n+4, preparation of the information necessary for sending the SRS. In this way, the terminal device can send the SRS only after 4 ms. In a conventional TTI-based transmission system, a low-latency requirement cannot be met. In an sTTI-based transmission system, this timing mechanism is far from meeting a low-latency requirement.

Therefore, to meet the low-latency requirement of the system, in the method for transmitting a sounding reference signal in this embodiment of the present invention, the interval duration between the moment at which the terminal device receives the control signaling and the moment of completing preparation of the information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

In this embodiment of the present invention, two manners may be used to indicate the interval duration between the moment at which the terminal device receives the control signaling and the moment of completing preparation of the information necessary for sending the SRS. The following separately describes in detail the two manners of indicating the duration.

### Manner 1

A TI is used to indicate the interval duration between the moment at which the terminal device receives the control signaling and the moment of completing preparation of the information necessary for sending the SRS.

The interval duration between the first moment and the start moment of the first TI is less than P milliseconds, and 0<P≤4.

Optionally, the first moment belongs to a second TI. There is an interval of L TIs between the start moment of the first TI and a start moment of the second TI. L is an integer greater than or equal to 0. L is a predefined value, or L is configured using signaling.

It should be understood that the interval duration between moment #1 and the start moment of TI#1 is less than 4 milliseconds. Moment #1 belongs to TI#2. There is an interval of L TIs between the start moment of TI#1 and the start moment of TI#2. If moment #1 is the start moment of TI#2, duration corresponding to the L TIs is equal to the interval duration between moment #1 and the start moment of TI#1. If moment #1 is a moment after the start moment of TI#2, the duration corresponding to the L TIs is less than the interval duration between moment #1 and the start moment of TI#1.

Optionally, the signaling may be high-layer signaling, or may be physical layer signaling. To be specific, L is sent by the network device to the terminal device using the high-layer signaling. L may alternatively be sent by the network device to the terminal device using the physical layer signaling. For example, L is sent by the network device to the terminal device using downlink control information (Downlink Control Information, "DCI" for short). L may change depending on a switching capability of the terminal device and the like. As an example instead of a limitation, the terminal device may alternatively obtain L in another manner. The present invention is not limited thereto. For example, the network device notifies the terminal device in a broadcast manner.

The terminal device may determine, based on a value of L, that the terminal device needs to complete, within TI#2 at an interval of L TIs apart from the start moment of the current TI (namely, TI#1), preparation of the information necessary for sending the SRS, so that the SRS can be sent. Therefore, it may also be considered that TI#2 is used to determine the target sending time period.

It should be understood that TI#2 is an uplink TI. When moment #1 belongs to TI#2, there are two cases (namely, case 1 and case 2) of determining the target sending time period. The following provides description of the two cases.

### Case 1

TI#2 includes a sending time period:
If the terminal device completes, before the sending time period, preparation of the information necessary for sending the SRS, that is, moment #1 is before the sending time period, the target sending time period is the sending time period in TI#2.

If the terminal device completes, in the sending time period or after the sending time period, preparation of the information necessary for sending the SRS, that is, moment #1 is in the sending time period or after the sending time period, the target sending time period does not belong to TI#2, and the first sending time period after TI#2 is the target sending time period.

### Case 2

TI#2 does not include a sending time period:
As long as the terminal device completes, at any moment in TI#2, preparation of the information necessary for sending the SRS, the target sending time period is the first sending time period after TI#2.

It should be noted that TI#2 may be considered as a type of instruction information, used to instruct the terminal device to send the SRS. Specific content, as described above, is used to indicate that the terminal device may send the SRS in TI#2 and an uplink TI after TI#2. Therefore, the terminal device needs to complete, before an end moment of TI#2, preparation of the information necessary for sending the SRS, so as to further send the SRS.

It should be understood that TI#1 includes M symbols. TI#2 includes N symbols, where 1≤M≤14, 1≤N≤14, and M and N are positive integers.

For sTTI-based transmission, optionally, 1≤M≤7, and 1≤N≤7. In consideration of transmit capabilities of the terminal device and the network device, optionally, M≤N.

To better describe the embodiment of the present invention, the following describes the embodiment of the present invention in detail with reference to accompanying drawings.

First, that M=7, and N=7, that is, TI#1 includes seven symbols and TI#2 includes seven symbols is used as an example to describe this embodiment of the present invention.

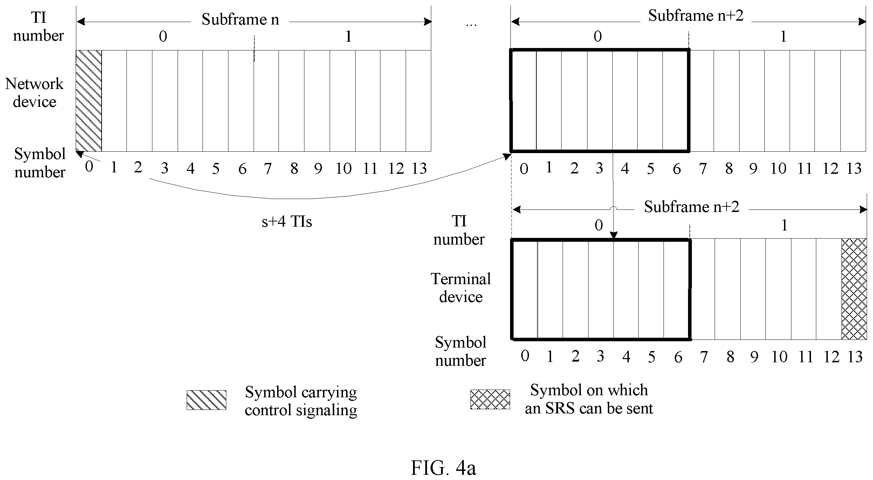

As shown in FIG. 4a, the control signaling is carried on the first symbol of TI0 of subframe n. High-layer signaling is configured for the terminal device, so that the terminal device can send the SRS on the last symbol of TI1 of subframe n+2.

If L is 4, the terminal device needs to complete, in the first TI at an interval of four TIs apart from a start moment of TI0 of subframe n, preparation of the information necessary for sending the SRS, that is, the first TI is corresponding to TI0 of subframe n+2. Because TI0 of subframe n+2 is not a TI for sending the SRS, the terminal device cannot send the SRS, and can send the SRS only in TI1 of subframe n+2.

If L is 5, the terminal device needs to complete, in the first TI at an interval of five TIs apart from a start moment of TI0 of subframe n, preparation of the information necessary for sending the SRS, that is, the first TI is corresponding to TI1 of subframe n+2. If a symbol to which moment #1 belongs is before the last symbol of TI1 of subframe n+2, the terminal device may send the SRS in TI1 of subframe n+2. If a symbol to which moment #1 belongs is the last symbol of TI1 of subframe n+2, the terminal device may send the SRS only in a TI that is after TI1 of subframe n+2 and that is used to send the SRS.

It should be noted that for ease of description, a method for configuring the interval duration between the moment at which the terminal device receives the control signaling and the moment of completing preparation of the information necessary for sending the SRS is recorded as a preparation timing scheme.

In this embodiment of the present invention, TI#1 and TI#2 may be configured based on any one of the TI structures in FIG. 2a to FIG. 2f.

Optionally, a value of M is any one of the following: 2 or 3, and a value of N is any one of the following: 2, 3, 4, or 7.

As an example instead of a limitation, that TI#1 includes two symbols or three symbols and TI#2 includes three symbols or four symbols is used as an example to describe the preparation timing scheme for sending the SRS in this embodiment of the present invention.

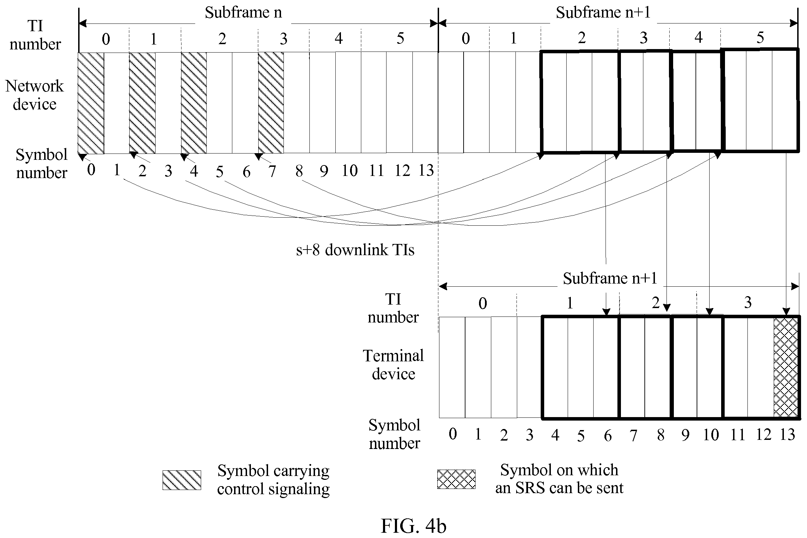

TI structures of TI#1 and TI#2 are shown in FIG. 4b. High-layer signaling is configured for the terminal device, so that the terminal device can send the SRS on the last symbol of subframe n+1, where L is 8.

It should be understood that because a TI structure of subframe n is different from that of subframe n+1; in other words, an uplink TI and a downlink TI have different structures, the L TIs may be L uplink TIs, or may be L downlink TIs. In the following, that the L TIs are L downlink TIs is used as an example to describe in detail this embodiment of the present invention.

In the following, for TI structures shown in FIG. 4b, six preparation timing schemes are listed.

### Preparation timing scheme 1

The control signaling is carried in downlink TI0 of subframe n; in other words, TI#1 is downlink TI0 of subframe n. The terminal device needs to complete, in the first downlink TI at an interval of eight downlink TIs apart from a start moment of downlink TI0 of subframe n, preparation of the information necessary for sending the SRS. For a downlink, the first downlink TI at an interval of eight downlink TIs apart from the start moment of uplink TI0 of subframe n is downlink TI2 of subframe n+1. For an uplink TI, downlink TI2 of subframe n+1 is corresponding to uplink TI1 of subframe n+1. Because uplink TI1 of subframe n+1 is not a TI for sending the SRS, the terminal device cannot send the SRS in uplink TI1 of subframe n+1, and can send the SRS only in uplink TI3 of subframe n+1.

In other words, the preparation timing scheme 1 is that TI#1 is downlink TI0 of subframe n, TI#2 is uplink TI1 of subframe n+1, and the target sending time period is uplink TI3 of subframe n+1.

In this embodiment of the present invention, because TI#1 is a downlink TI, TI#2 is an uplink TI, and TI structures of the downlink TI and the uplink TI are different, it is necessary to determine a number of an uplink TI at an interval of L downlink TIs apart from the start moment of TI#1, namely, TI#2.

The preparation timing scheme 1 is used as an example to describe determining of the number of the uplink TI at an interval of L downlink TIs apart from the start moment of TI#1. TI#1 is downlink TI0 of subframe n. For the downlink TI, the first downlink TI at an interval of eight downlink TIs apart from the start moment of downlink TI0 is downlink TI2 of subframe n+1. The last symbol of downlink TI2 of subframe n+1 is corresponding to the fourth symbol of uplink TI1 of subframe n+1, and the uplink TI at an interval of eight downlink TIs apart from the start moment of TI#1 is uplink TI1 of subframe n+1.

In other words, when the uplink TI at an interval of L downlink TIs apart from the start moment of TI#1 is determined, an uplink TI of a subframe corresponding to the last symbol of the first downlink TI at an interval of L downlink TIs apart from the start moment of TI#1 is determined as TI#2.

### Preparation timing scheme 2

The control signaling is carried in downlink TI1 of subframe n; in other words, TI#1 is downlink TI1 of subframe n. The terminal device needs to complete, in the first downlink TI at an interval of eight downlink TIs apart from a start moment of TI1 of subframe n, preparation required for sending the SRS. For a downlink, the first TI at an interval of eight downlink TIs apart from the start moment of downlink TI1 of subframe n is downlink TI3 of subframe n+1. For an uplink TI, downlink TI3 of subframe n+1 is corresponding to uplink TI2 of subframe n+1. Because uplink TI2 of subframe n+1 is not a TI for sending the SRS, the terminal device cannot send the SRS in uplink TI2 of subframe n+1, and can send the SRS only in uplink TI3 of subframe n+1.

In other words, the preparation timing scheme 2 is that TI#1 is downlink TI1 of subframe n, TI#2 is uplink TI2 of subframe n+1, and the target sending time period is uplink TI3 of subframe n+1.

Likewise, when the uplink TI at an interval of eight downlink TIs apart from the start moment of TI#1 is determined, an uplink TI of a subframe corresponding to the last symbol of the first downlink TI at an interval of eight downlink TIs apart from the start moment of TI#1 is determined as TI#2. That is, the last symbol (namely, symbol 8) of the first downlink TI at an interval of eight downlink TIs apart from the start moment of TI#1 is corresponding to the second symbol of uplink TI2 of sub frame n+1. A specific determining method and process are the same as those in the preparation timing scheme 1. To avoid repetition, details are not described herein again.

### Preparation timing scheme 3

The control signaling is carried in downlink TI2 of subframe n; in other words, TI#1 is downlink TI2 of subframe n. The terminal device needs to complete, in the first TI at an interval of eight downlink TIs apart from a start moment of downlink TI2 of subframe n, preparation of information necessary for sending the SRS. For a downlink, the first TI at an interval of eight downlink TIs apart from the start moment of downlink TI2 of subframe n is downlink TI4 of subframe n+1. For an uplink TI, downlink TI4 of subframe n+1 is corresponding to uplink TI3 of subframe n+1. It should be noted that uplink TI3 of subframe n+1 is a TI for sending the SRS, a symbol for sending the SRS is the last symbol of uplink TI3 of subframe n+1, the last symbol (namely, symbol 10) of the first downlink TI at an interval of eight downlink TIs apart from the start moment of TI#1 is corresponding to the first symbol that is of uplink TI3 of subframe n+1 and that is before, in time domain, the symbol for sending the SRS. Therefore, the target sending time period is uplink TI3 of subframe n+1.

In other words, the preparation timing scheme 3 is that TI#1 is downlink TI2 of subframe n, TI#2 is uplink TI3 of subframe n+1, and the target sending time period is uplink TI3 of subframe n+1.

Likewise, when the uplink TI at an interval of eight downlink TIs apart from the start moment of TI#1 is determined, an uplink TI of a subframe corresponding to the last symbol of the first downlink TI at an interval of eight downlink TIs apart from the start moment of TI#1 is determined as TI#2. That is, the last symbol (namely, symbol 10) of the first downlink TI at an interval of eight downlink TIs apart from the start moment of TI#1 is corresponding to the first symbol of uplink TI3 of subframe n+1. A specific determining method and process are the same as those in the preparation timing scheme 1. To avoid repetition, details are not described herein again.

### Preparation timing scheme 4

The control signaling is carried in downlink TI3 of subframe n; in other words, TI#1 is downlink TI3 of subframe n. The terminal device needs to complete, in the first TI at an interval of eight downlink TIs apart from a start moment of downlink TI3 of subframe n, preparation required for sending the SRS. For a downlink, the first TI at an interval of eight downlink TIs apart from the start moment of downlink TI3 of subframe n is downlink TI5 of subframe n+1. For an uplink TI, downlink TI5 of subframe n+1 is corresponding to uplink TI3 of subframe n+1. It should be noted that the last symbol in uplink TI3 of subframe n+1 is used to send the SRS, and the last symbol (namely, symbol 13) of the first downlink TI at an interval of eight downlink TIs apart from the start moment of TI#1 is corresponding to the last symbol of uplink TI3 of subframe n+1 and overlaps with the symbol for sending the SRS. Therefore, only the first sending time period after subframe n+1 can be determined as the target sending time period. Due to a space limitation, this is not shown in the figure.

In other words, the preparation timing scheme 4 is that TI#1 is downlink TI3 of subframe n, TI#2 is uplink TI3 of subframe n+1, and the target sending time period is the first sending time period after subframe n+1.

Likewise, when the uplink TI at an interval of eight downlink TIs apart from the start moment of TI#1 is determined, an uplink TI of a subframe corresponding to the last symbol of the first downlink TI at an interval of eight downlink TIs apart from the start moment of TI#1 is determined as TI#2. That is, the last symbol (namely, symbol 13) of the first downlink TI at an interval of eight downlink TIs apart from the start moment of TI#1 is corresponding to the fourth symbol of uplink TI3 of subframe n+1. A specific determining method and process are the same as those in the preparation timing scheme 1. To avoid repetition, details are not described herein again.

### Preparation timing scheme 5

The control signaling is carried in downlink TI4 of subframe n; in other words, TI#1 is downlink TI4 of subframe n. The terminal device needs to complete, in the first TI at an interval of eight downlink TIs apart from a start moment of downlink TI4 of subframe n, preparation of information necessary for sending the SRS. For a downlink, the first TI at an interval of eight downlink TIs apart from the start moment of downlink TI4 of subframe n is downlink TI0 of subframe n+2. For an uplink TI, downlink TI0 of subframe n+2 is corresponding to uplink TI0 of subframe n+2. Because uplink TI0 of subframe n+2 is not a TI for sending the SRS, the terminal device cannot send the SRS in uplink TI0 of subframe n+2, and can send the SRS only in the first sending time period after TI0 of subframe n+2. Due to a space limitation, this is not shown in the figure.

In other words, the preparation timing scheme 5 is that TI#1 is downlink TI4 of subframe n, TI#2 is uplink TI0 of subframe n+2, and the target sending time period is the first sending time period after uplink TI0 of subframe n+2.

Likewise, when the uplink TI at an interval of eight downlink TIs apart from the start moment of TI#1 is determined, an uplink TI of a subframe corresponding to the last symbol of the first downlink TI at an interval of eight downlink TIs apart from the start moment of TI#1 is determined as TI#2. That is, the last symbol (namely, symbol 1) of the first downlink TI at an interval of eight downlink TIs apart from the start moment of TI#1 is corresponding to the second symbol of uplink TI0 of subframe n+2. A specific determining method and process are the same as those in the preparation timing scheme 1. To avoid repetition, details are not described herein again.

### Preparation timing scheme 6

The control signaling is carried in downlink TI5 of subframe n; in other words, TI#1 is downlink TI5 of subframe n. The terminal device needs to complete, in the first TI at an interval of eight downlink TIs apart from a start moment of downlink TI5 of subframe n, preparation of information necessary for sending the SRS. For a downlink, the first TI at an interval of eight downlink TIs apart from the start moment of TI5 of subframe n is downlink TI1 of subframe n+2. For an uplink TI, downlink TI1 of subframe n+2 is corresponding to uplink TI1 of subframe n+2. Because uplink TI1 of subframe n+2 is not a TI for sending the SRS, the terminal device cannot send the SRS in uplink TI1 of subframe n+2, and can send the SRS only in the first sending time period after TI1 of subframe n+2. Due to a space limitation, this is not shown in the figure.

In other words, the preparation timing scheme 6 is that TI#1 is downlink TI5 of subframe n, TI#2 is uplink TI1 of subframe n+2, and the target sending time period is the first sending time period after uplink TI1 of subframe n+2. Likewise, when the uplink TI at an interval of eight downlink TIs apart from the start moment of TI#1 is determined, an uplink TI of a subframe corresponding to the last symbol of the first downlink TI at an interval of eight downlink TIs apart from the start moment of TI#1 is determined as TI#2. That is, the last symbol (namely, symbol 3) of the first downlink TI at an interval of eight downlink TIs apart from the start moment of TI#3 is corresponding to the first symbol of uplink TI1 of subframe n+2. A specific determining method and process are the same as those in the preparation timing scheme 1. To avoid repetition, details are not described herein again.

It should be understood that the foregoing six preparation timing schemes are merely examples for description. The present invention is not limited thereto. Many preparation timing schemes are generated when TI structures of the uplink TI and the downlink TI, symbols carrying the control signaling, sending time periods configured using high-layer signaling, and L values are different. A specific method and process for determining the preparation timing scheme are the same as those described above. Therefore, an SRS configuration manner in FIG. 4b should not constitute a limitation on the present invention.

That the L TIs are L downlink TIs is used as an example above to describe in detail the embodiment of the present invention. To avoid repetition, in the following, that the L TIs are L uplink TIs is used as an example to briefly describe the embodiment of the present invention.

Same as the above, L=8, TI#1 includes two symbols or three symbols, and TI#2 includes three symbols or four symbols.

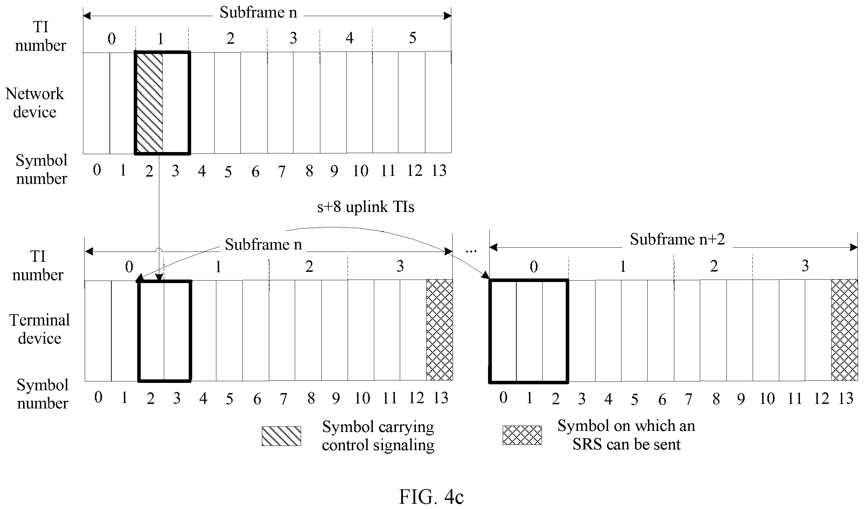

As shown in FIG. 4c, the control signaling is carried in downlink TI1 of subframe n; in other words, TI#1 is downlink TI1 of subframe n. The terminal device needs to complete, in the first uplink TI at an interval of eight uplink TIs apart from a start moment of downlink TI1 of subframe n, preparation of the information necessary for sending the SRS, that is, the first uplink TI is corresponding to uplink TI0 of subframe n+2. Because uplink TI0 of subframe n+2 is not a TI for sending the SRS, the terminal device cannot send the SRS in uplink TI0 of subframe n+2, and can send the SRS only in uplink TI3 of subframe n+2.

Likewise, because TI#1 is a downlink TI, TI#2 is an uplink TI, and TI structures of the downlink TI and the uplink TI are different, it is necessary to determine a number of an uplink TI at an interval of L uplink TIs apart from the start moment of TI#1, namely, TI#2.

A specific determining process is as follows: TI#1 is downlink TI1 of subframe n. The control signaling is carried on the first symbol of downlink TI1, namely, the third symbol of subframe n. The third symbol of subframe n is mapped onto an uplink TI, which is equivalent to the third symbol of subframe n on a terminal device side; in other words, corresponding to the third symbol of uplink TI0 of subframe n on the terminal device side. Then, the first uplink TI at an interval of eight uplink TIs apart from the start moment of downlink TI1 of subframe n is uplink TI0 of subframe n+2, that is, uplink TI0 of subframe n+2 is determined as TI#2. That is, when the first uplink TI at an interval of eight uplink TIs apart from the start moment of downlink TI1 of subframe n is determined, subframe n is divided based on an uplink TI structure. In addition, the symbol, carrying the control signaling, in downlink TI1 of subframe n is mapped onto an uplink TI of subframe n divided based on the uplink TI structure. An uplink TI that is obtained through division based on the uplink TI structure and that is at an interval of L uplink TIs apart from a start moment of the uplink TI of subframe n is determined as TI#2.

Likewise, in FIG. 4c, there are also six preparation timing schemes determined using the L TIs as L uplink TIs. The six schemes are the same as the six schemes in the embodiment in which that the L TIs are L downlink TIs is used as an example. In addition, a method and process for determining the uplink TI at an interval of L uplink TIs apart from the start moment of TI#1 are the same as those in an SRS configuration manner in FIG. 4c. To avoid repetition, details are not described herein again.

### Manner 2

The interval duration between the first moment and a start moment of the symbol to carry the control signaling and that is in the first TI is less than P milliseconds, and 0<P≤4.

Optionally, there is an interval of K symbols between the first moment and a start moment of the symbol to carry the control signaling and that is in the first TI. K is a positive integer greater than or equal to 1, and K is a predefined value, or K is configured using signaling.

Optionally, the signaling may be high-layer signaling, or may be physical layer signaling. That is, K is sent by the network device to the terminal device using high-layer signaling, or K may be sent by the network device to the terminal device using physical layer signaling. For example, K is sent by the network device to the terminal device using DCI. K may change depending on a switching capability of the terminal device and the like. As an example instead of a limitation, the terminal device may alternatively obtain K in another manner. The present invention is not limited thereto. For example, the network device notifies the terminal device in a broadcast manner.

When moment #1 belongs to an uplink TI, to distinguish from the foregoing TI#2, the uplink TI to which moment #1 belongs is denoted as TI#3. Likewise, there are two cases (namely, case 1 and case 2) of determining the target sending time period. The following provides description of the two cases.

### Case 1

TI#3 includes a sending time period:
If the terminal device completes, before the sending time period, preparation of the information necessary for sending the SRS, that is, moment #1 is before the sending time period, the target sending time period is the sending time period in TI#3.

If the terminal device completes, in the sending time period or after the sending time period, preparation of the information necessary for sending the SRS, that is, moment #1 is in the sending time period or after the sending time period, the target sending time period does not belong to TI#3, and the first sending time period after TI#3 is the target sending time period.

### Case 2

TI#3 does not include a sending time period:
As long as the terminal device completes, at any moment in TI#3, preparation of the information necessary for sending the SRS, the target sending time period is the first sending time period after TI#3.

It should be noted that moment #1 may be considered as a type of instruction information, used to indicate that the terminal device may send the SRS at moment #1 and on a symbol after moment #1. Therefore, the terminal device needs to complete, before moment #1 or at moment #1, preparation of the information necessary for sending the SRS, so as to further send the SRS.

It should be understood that TI#1 includes M symbols. TI#3 includes N symbols, where 1≤M≤14, 1≤N≤14, and M and N are positive integers.

For sTTI-based transmission, optionally, 1≤M≤7, and 1≤N≤7. In consideration of transmit capabilities of the terminal device and the network device, optionally, M≤N.

Optionally, a value of M is any one of the following: 2 or 3, and a value of N is any one of the following: 2, 3, 4, or 7.

As an example instead of a limitation, that TI#1 includes two symbols or three symbols and TI#3 includes three symbols or four symbols is used as an example to describe the preparation timing scheme for sending the SRS in this embodiment of the present invention.

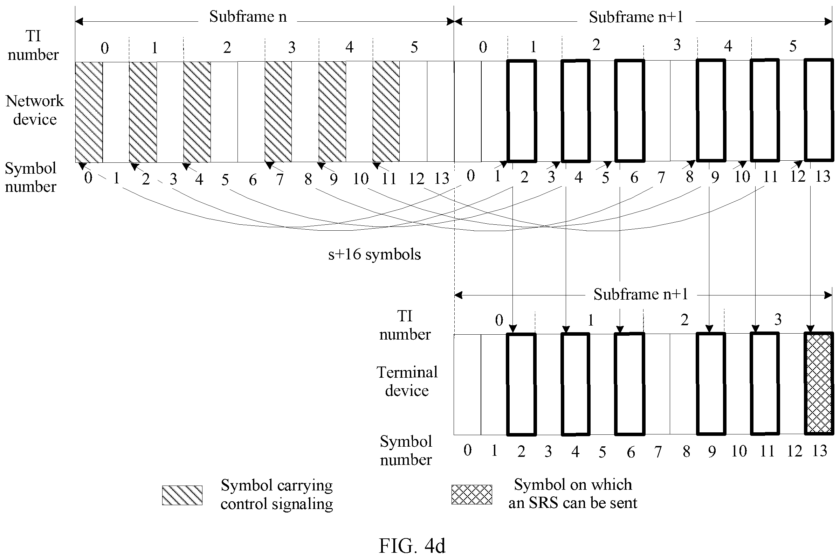

TI structures of TI#1 and TI#3 are shown in FIG. 4d. High-layer signaling is configured for the terminal device, so that the terminal device can send the SRS on the last symbol of subframe n+1, where K is 16.

In the following, for TI structures shown in FIG. 4d, six preparation timing schemes are listed.

### Preparation timing scheme 1

The control signaling is carried on the first symbol of subframe n, and the first symbol is denoted as symbol 0, that is, on the first symbol of downlink TI0 of subframe n. The terminal device needs to complete, on the first symbol at an interval of 16 symbols apart from a start moment of symbol 0, preparation of the information necessary for sending the SRS; in other words, the first symbol is corresponding to the third symbol of subframe n+1. For a downlink TI, the third symbol belongs to downlink TI1 of subframe n+1. For an uplink TI, the third symbol belongs to uplink TI0 of subframe n+1, that is, the third symbol is corresponding to the third symbol of uplink TI0 of subframe n+1. Because uplink TI0 of subframe n+1 is not a TI for sending the SRS, the terminal device cannot send the SRS, and can send the SRS only in uplink TI3 of subframe n+1.

In other words, the preparation timing scheme 1 is that TI#1 is downlink TI0 of subframe n. For an uplink TI, the first symbol at an interval of 16 symbols apart from the start moment of the symbol carrying the control signaling in TI#1 is the third symbol of uplink TI0 of subframe n+1. TI#3 is uplink TI0 of subframe n+1. The target sending time period is uplink TI3 of subframe n+1.

### Preparation timing scheme 2

The control signaling is carried on the third symbol of subframe n, and the third symbol is denoted as symbol 2, that is, on the first symbol of downlink TI1 of subframe n. The terminal device needs to complete, on the first symbol at an interval of 16 symbols apart from a start moment of symbol 2, preparation of the information necessary for sending the SRS; in other words, the first symbol is corresponding to the fifth symbol of subframe n+1. For a downlink TI, the fifth symbol belongs to downlink TI2 of subframe n+1. For an uplink TI, the fifth symbol belongs to uplink TI1 of subframe n+1, that is, the fifth symbol is corresponding to the second symbol of uplink TI1 of subframe n+1. Because uplink TI1 of subframe n+1 is not a TI for sending the SRS, the terminal device cannot send the SRS, and can send the SRS only in uplink TI3 of subframe n+1.

In other words, the preparation timing scheme 2 is that TI#1 is downlink TI1 of subframe n. For an uplink TI, the first symbol at an interval of 16 symbols apart from the symbol carrying the control signaling in TI#1 is the second symbol of uplink TI1 of subframe n+1. TI#3 is uplink TI1 of subframe n+1. The target sending time period is uplink TI3 of subframe n+1.

### Preparation timing scheme 3

The control signaling is carried on the fifth symbol of subframe n, and the fifth symbol is denoted as symbol 4, that is, on the first symbol of downlink TI2 of subframe n. The terminal device needs to complete, on the first symbol at an interval of 16 symbols apart from a start moment of symbol 4, preparation of the information necessary for sending the SRS; in other words, the first symbol is corresponding to the seventh symbol of subframe n+1. For a downlink TI, the seventh symbol belongs to downlink TI2 of subframe n+1. For an uplink TI, the seventh symbol belongs to uplink TI1 of subframe n+1, that is, the seventh symbol is corresponding to the fourth symbol of uplink TI1 of subframe n+1. Because uplink TI1 of subframe n+1 is not a TI for sending the SRS, the terminal device cannot send the SRS, and can send the SRS only in uplink TI3 of subframe n+1.

In other words, the preparation timing scheme 3 is that TI#1 is downlink TI2 of subframe n. For an uplink TI, the first symbol at an interval of 16 symbols apart from the symbol carrying the control signaling in TI#1 is the fourth symbol of uplink TI1 of subframe n+1. TI#3 is uplink TI1 of subframe n+1. The target sending time period is uplink TI3 of subframe n+1.

### Preparation timing scheme 4

The control signaling is carried on the eighth symbol of subframe n, and the eighth symbol is denoted as symbol 7, that is, on the first symbol of downlink TI3 of subframe n. The terminal device needs to complete, on the first symbol at an interval of 16 symbols apart from a start moment of symbol 7, preparation of the information necessary for sending the SRS; in other words, the first symbol is corresponding to the tenth symbol of subframe n+1. For a downlink TI, the tenth symbol belongs to downlink TI4 of subframe n+1. For an uplink TI, the tenth symbol belongs to uplink TI2 of subframe n+1, that is, the tenth symbol is corresponding to the third symbol of uplink TI2 of subframe n+1. Because uplink TI2 of subframe n+1 is not a TI for sending the SRS, the terminal device cannot send the SRS, and can send the SRS only in uplink TI3 of subframe n+1.

In other words, the preparation timing scheme 4 is that TI#1 is downlink TI3 of subframe n. For an uplink TI, the first symbol at an interval of 16 symbols apart from the symbol carrying the control signaling in TI#1 is the third symbol of uplink TI2 of subframe n+1. TI#3 is uplink TI2 of subframe n+1. The target sending time period is TI3 of subframe n+1.

### Preparation timing scheme 5

The control signaling is carried on the tenth symbol of subframe n, and the tenth symbol is denoted as symbol 9, that is, on the first symbol of downlink TI4 of subframe n. The terminal device needs to complete, on the first symbol at an interval of 16 symbols apart from a start moment of symbol 9, preparation of the information necessary for sending the SRS; in other words, the first symbol is corresponding to the twelfth symbol of subframe n+1. For a downlink TI, the twelfth symbol belongs to downlink TI5 of subframe n+1. For an uplink TI, the twelfth symbol belongs to uplink TI3 of subframe n+1, that is, the twelfth symbol is corresponding to the second symbol of uplink TI3 of subframe n+1. Uplink TI3 of subframe n+1 is a TI for sending the SRS, a symbol for sending the SRS is the last symbol of uplink TI3 of subframe n+1, and the first symbol at an interval of 16 symbols apart from the start moment of the symbol carrying the control signaling is corresponding to the second symbol of uplink TI3 of subframe n+1, and is before, in time domain, the symbol for sending the SRS. Therefore, the target sending time period is TI3 of subframe n+1.

In other words, the preparation timing scheme 5 is that TI#1 is downlink TI4 of subframe n. For an uplink TI, the first symbol at an interval of 16 symbols apart from the symbol carrying the control signaling in TI#1 is the second symbol of uplink TI3 of subframe n+1. TI#3 is uplink TI3 of subframe n+1. The target sending time period is TI3 of subframe n+1.

### Preparation timing scheme 6

The control signaling is carried on the twelfth symbol of subframe n, and the twelfth symbol is denoted as symbol 11, that is, on the first symbol of downlink TI5 of subframe n. The terminal device needs to complete, on the first symbol at an interval of 16 symbols apart from a start moment of symbol 11, preparation of the information necessary for sending the SRS; in other words, the first symbol is corresponding to the fourteenth symbol of subframe n+1. For a downlink TI, the fourteenth symbol belongs to downlink TI5 of subframe n+1. For an uplink TI, the fourteenth symbol belongs to uplink TI3 of subframe n+1, that is, the fourteenth symbol is corresponding to the fourth symbol of uplink TI3 of subframe n+1. It should be noted that the last symbol in TI3 of subframe n+1 is used to send the SRS, and the first symbol at an interval of 16 symbols apart from the start moment of the symbol (namely, symbol 11) carrying the control signaling is corresponding to the last symbol of uplink TI3 of subframe n+1, and overlaps with the symbol for sending the SRS. Therefore, only the first sending time period after subframe n+1 can be determined as the target sending time period. Due to a space limitation, this is not shown in the figure.

In other words, the preparation timing scheme 6 is that TI#1 is downlink TI5 of subframe n. For an uplink TI, the first symbol at an interval of 16 symbols apart from the symbol carrying the control signaling in TI#1 is the fourth symbol of uplink TI3 of subframe n+1. TI#3 is uplink TI3 of subframe n+1. The target sending time period is the first sending time period after subframe n+1.

It should be understood that the foregoing six preparation timing schemes are merely examples for description. The present invention is not limited thereto. Many preparation timing schemes are generated when TI structures of the uplink TI and the downlink TI, symbols carrying the control signaling, symbols that are configured using high-layer signaling and that are for sending the SRS, and K values are different. A specific method and process for determining the preparation timing scheme are the same as those described above. Therefore, an SRS configuration manner in FIG. 4d should not constitute a limitation on the present invention.

In S230, the terminal device sends the SRS in the target sending time period.

Therefore, the network device may receive the SRS in the target sending time period.

Therefore, it can be learned from the foregoing that using an sTTI whose transmission time is relatively short, a system latency may be decreased more effectively; in addition, the network device can send the control signaling for a plurality of times in one subframe, thereby improving system flexibility.

Therefore, in the method for transmitting a sounding reference signal in this embodiment of the present invention, the interval duration between the moment at which the terminal device receives the control signaling and the moment of completing preparation of the information necessary for sending the SRS is decreased to be less than 4 ms, so that the interval duration between the moment at which the terminal device receives the control signaling and the moment of sending the SRS is decreased, an aperiodic SRS is rapidly responded and sent, and a system latency is shortened effectively. This is especially important for sTTI-based transmission that has a relatively high latency requirement. In addition, the sTTI whose transmission time interval is relatively short is used to send the control signaling for a plurality of times in one subframe, thereby improving the system flexibility.

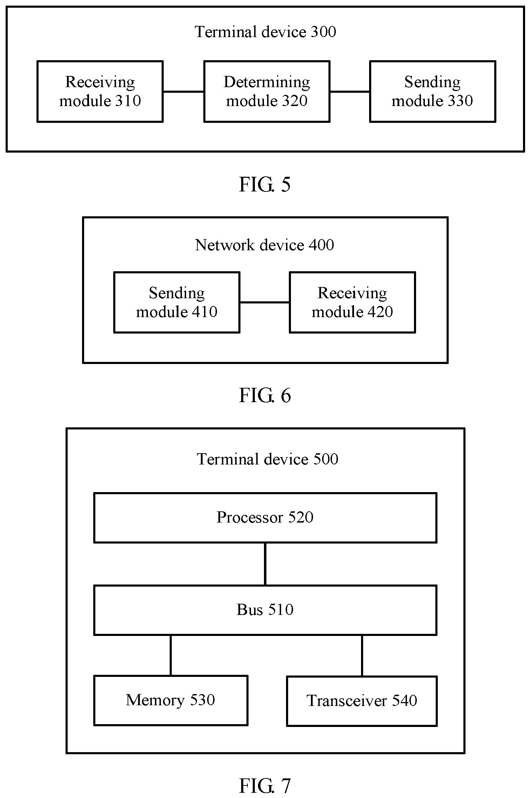

The foregoing describes the method for transmitting a sounding reference signal according to the embodiments of the present invention with reference to FIG. 1 to FIG. 4d. The following separately describes a terminal device and a network device according to embodiments of the present invention with reference to FIG. 5 to FIG. 8. Technical features described in the method embodiments are also applicable to the following embodiments of the terminal device and the network device.

FIG. 5 shows a terminal device 300 according to an embodiment of the present invention. The terminal device 300 includes:
a receiving module 310, configured to receive control signaling in a first time interval TI, where the control signaling is used to instruct the terminal device to send an SRS;
a determining module 320, configured to: after the control signaling is received, determine a target sending time period from at least one sending time period, where the target sending time period is a first sending time period, after a first moment, in the at least one sending time period, and interval duration between the first moment and a start moment of the first TI is less than P milliseconds, or interval duration between the first moment and a start moment of the first TI is less than P milliseconds, where 0<P≤4; and
a sending module 330, configured to send the SRS in the target sending time period determined by the determining module 320.

Therefore, according to the terminal device in this embodiment of the present invention, interval duration between a moment at which the terminal device receives the control signaling and a moment of completing preparation of information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

Optionally, the first moment belongs to a second TI. There is an interval of L TIs between the start moment of the first TI and a start moment of the second TI. L is an integer greater than or equal to 0. L is a predefined value, or L is configured using signaling.

Optionally, the first TI includes M symbols, and the second TI includes N symbols, where 1≤M≤7, 1≤N≤7, M≤N, and M and N are positive integers.

Therefore, using an sTTI whose transmission time is relatively short, a system latency may be decreased more effectively; in addition, the terminal device can receive the control signaling for a plurality of times in one subframe, thereby improving system flexibility.

Optionally, there is an interval of K symbols between the first moment and a start moment of a symbol to carry the control signaling and that is in the first TI. K is a positive integer greater than or equal to 1, and K is a predefined value, or K is configured using signaling.

Optionally, the control signaling is carried on the first symbol of the first TI.

The terminal device 300 according to this embodiment of the present invention may be corresponding to the terminal device in the method in the embodiment of the present invention. In addition, units, namely, modules in the terminal device 300, and the foregoing other operations and/or functions are separately intended to implement corresponding procedures performed by the terminal device in the method 200. For brevity, details are not described herein again.

Therefore, according to the terminal device in this embodiment of the present invention, the interval duration between the moment at which the terminal device receives the control signaling and the moment of completing preparation of the information necessary for sending the SRS is decreased to be less than 4 ms, so that the interval duration between the moment at which the terminal device receives the control signaling and the moment of sending the SRS is decreased, an aperiodic SRS is rapidly responded and sent, and a system latency is shortened effectively. This is especially important for sTTI-based transmission that has a relatively high latency requirement. In addition, the sTTI whose transmission time interval is relatively short is used, so that the terminal device can receive the control signaling for a plurality of times in one subframe, thereby improving the system flexibility.

FIG. 6 shows a network device 400 according to an embodiment of the present invention. The network device 400 includes:
a sending module 410, configured to send control signaling in a first time interval TI, where the control signaling is used to instruct a terminal device to send an SRS; and
a receiving module 420, configured to: after the control signaling is sent, receive the SRS in a target sending time period, where the target sending time period is a first sending time period, after a first moment, in a at least one sending time period, and interval duration between the first moment and a start moment of the first TI is less than P milliseconds, or interval duration between the first moment and a start moment of a symbol to carry the control signaling and that is in the first TI is less than P milliseconds, and 0<P≤4.

Therefore, according to the network device in this embodiment of the present invention, interval duration between a moment at which the terminal device receives the control signaling and a moment of completing preparation of information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

Optionally, the first moment belongs to a second TI. There is an interval of L TIs between the start moment of the first TI and a start moment of the second TI. L is an integer greater than or equal to 0. L is a predefined value, or L is configured using signaling.

Optionally, the first TI includes M symbols, and the second TI includes N symbols, where 1≤M≤7, 1≤N≤7, M≤N, and M and N are positive integers.

Therefore, using an sTTI whose transmission time is relatively short, a system latency may be decreased more effectively; in addition, the network device can send the control signaling for a plurality of times in one subframe, thereby improving system flexibility.

Optionally, there is an interval of K symbols between the first moment and a start moment of the symbol to carry the control signaling and that is in the first TI. K is a positive integer greater than or equal to 1, and K is a predefined value, or K is configured using signaling.

Optionally, the control signaling is carried on the first symbol of the first TI.

The network device 400 according to this embodiment of the present invention may be corresponding to the network device in the method in the embodiment of the present invention. In addition, units, namely, modules in the network device 400, and the foregoing other operations and/or functions are separately intended to implement corresponding procedures performed by the network device in the method 200. For brevity, details are not described herein again.

Therefore, according to the network device in this embodiment of the present invention, the interval duration between the moment at which the terminal device receives the control signaling and the moment of completing preparation of the information necessary for sending the SRS is decreased to be less than 4 ms, so that the interval duration between the moment at which the terminal device receives the control signaling and the moment of sending the SRS is decreased, an aperiodic SRS is rapidly responded and sent, and a system latency is shortened effectively. This is especially important for sTTI-based transmission that has a relatively high latency requirement. In addition, the sTTI whose transmission time interval is relatively short is used, so that the network device can send the control signaling for a plurality of times in one subframe, thereby improving the system flexibility.

FIG. 7 shows a terminal device 500 according to an embodiment of the present invention. The terminal device 500 includes:
a bus 510;
a processor 520 connected to the bus 510;
a memory 530 connected to the bus 510; and
a transceiver 540 connected to the bus 510.

The memory 530 is configured to store an instruction. The processor 520 is configured to execute the instruction stored in the memory 530, so as to control the transceiver 540 to receive a signal or send a signal.

The transceiver 540 is configured to receive control signaling in a first time interval TI, where the control signaling is used to instruct the terminal device to send an SRS.

The processor 520 is further configured to: after the control signaling is received, determine a target sending time period from at least one sending time period, where the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, where 0<P≤4.

The transceiver 540 is further configured to send the SRS in the target sending time period determined by the processor 520.

Therefore, according to the terminal device in this embodiment of the present invention, interval duration between a moment at which the terminal device receives the control signaling and a moment of completing preparation of information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

Optionally, the first moment belongs to a second TI. There is an interval of L TIs between the start moment of the first TI and a start moment of the second TI. L is an integer greater than or equal to 0. L is a predefined value, or L is configured using signaling.

Optionally, the first TI includes M symbols, and the second TI includes N symbols, where 1≤M≤7, 1≤N≤7, M≤N, and M and N are positive integers.

Therefore, using an sTTI whose transmission time is relatively short, a system latency may be decreased more effectively; in addition, the terminal device can receive the control signaling for a plurality of times in one subframe, thereby improving system flexibility.

Optionally, there is an interval of K symbols between the first moment and a start moment of the symbol to carry the control signaling and that is in the first TI. K is a positive integer greater than or equal to 1, and K is a predefined value, or K is configured using signaling.

Optionally, the control signaling is carried on the first symbol of the first TI.

It should be understood that in the embodiment of the present invention, the processor 520 may be a central processing unit (Central Processing Unit, "CPU" for short), or the processor 520 may be another general purpose processor, a digital signal processor (DSP), an application-specific integrated circuit (ASIC), a field programmable gate array (FPGA), or another programmable logic device, a discrete gate or a transistor logic device, a discrete hardware component, or the like. The general purpose processor may be a microprocessor, or the processor may be any conventional processor or the like.

The memory 530 may include a read-only memory and a random access memory, and provide an instruction and data to the processor 520. A part of the memory 530 may further include a non-volatile random access memory. For example, the memory 530 may further store information about a device type.

The bus 510 may further include a power bus, a control bus, a status signal bus, and the like, in addition to a data bus. However, for clear description, various types of buses in the figure are marked as the bus 510.

In an implementation process, steps in the foregoing methods can be implemented using a hardware integrated logical circuit in the processor 520, or using instructions in a form of software. The steps of the method disclosed with reference to the embodiments of the present invention may be directly performed by a hardware processor, or may be performed using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory 530, and the processor 520 reads information in the memory 530 and completes the steps in the foregoing methods in combination with hardware of the processor. To avoid repetition, details are not described herein again.

The terminal device 500 according to this embodiment of the present invention may be corresponding to the terminal device in the method in the embodiment of the present invention. In addition, units, namely, modules in the device 500 for transmitting a sounding reference signal, and the foregoing other operations and/or functions are separately intended to implement corresponding procedures performed by the terminal device in the method 200. For brevity, details are not described herein again.

Therefore, according to the terminal device in this embodiment of the present invention, the interval duration between the moment at which the terminal device receives the control signaling and the moment of completing preparation of the information necessary for sending the SRS is decreased to be less than 4 ms, so that the interval duration between the moment at which the terminal device receives the control signaling and the moment of sending the SRS is decreased, an aperiodic SRS is rapidly responded and sent, and a system latency is shortened effectively. This is especially important for sTTI-based transmission that has a relatively high latency requirement. In addition, the sTTI whose transmission time interval is relatively short is used, so that the terminal device can receive the control signaling for a plurality of times in one subframe, thereby improving the system flexibility.

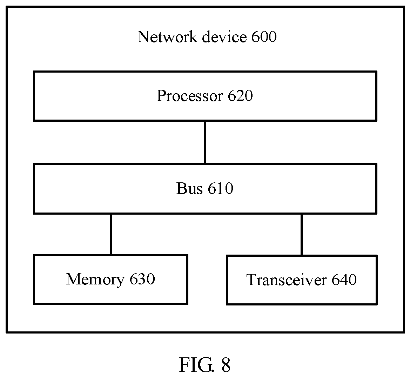

FIG. 8 shows a network device 600 according to an embodiment of the present invention. The network device 600 includes:
a bus 610;
a processor 620 connected to the bus 610;
a memory 630 connected to the bus 610; and
a transceiver 640 connected to the bus 610.

The memory 630 is configured to store an instruction. The processor 620 is configured to execute the instruction stored in the memory 630, so as to control the transceiver 640 to receive a signal or send a signal.

The transceiver 640 is configured to send control signaling in a first time interval TI, where the control signaling is used to instruct a terminal device to send an SRS.

The transceiver 640 is further configured to: after sending the control signaling, receive the SRS in a target sending time period, where the target sending time period is a first sending time period, after a first moment, in at least one sending time period, and interval duration between the first moment and a start moment of the first TI is less than P milliseconds, or interval duration between the first moment and a start moment of a symbol to carry the control signaling and that is in the first TI is less than P milliseconds, where 0<P≤4.

Therefore, according to the network device in this embodiment of the present invention, interval duration between a moment at which the terminal device receives the control signaling and a moment of completing preparation of information necessary for sending the SRS is decreased to be less than 4 ms, so that interval duration between the moment at which the terminal device receives the control signaling and a moment of sending the SRS is decreased, an aperiodic SRS is rapidly responded and sent, and a system latency is shortened effectively.

Optionally, the first moment belongs to a second TI. There is an interval of L TIs between a start moment of the second TI and the start moment of the first TI. L is an integer greater than or equal to 0. L is a predefined value, or L is configured using signaling.

Optionally, the first TI includes M symbols, and the second TI includes N symbols, where 1≤M≤7, 1≤N≤7, M≤N, and M and N are positive integers.

Therefore, using a short transmission time interval sTTI whose transmission time is relatively short, a system latency may be decreased more effectively; in addition, the network device can send the control signaling for a plurality of times in one subframe, thereby improving system flexibility.

Optionally, there is an interval of K symbols between the first moment and a start moment of the symbol to carry the control signaling and that is in the first TI. K is a positive integer greater than or equal to 1, and K is a predefined value, or K is configured using signaling.

Optionally, the control signaling is carried on the first symbol of the first TI.

It should be understood that in the embodiment of the present invention, the processor 620 may be a central processing unit (Central Processing Unit, "CPU" for short), or the processor 620 may be another general purpose processor, a digital signal processor (DSP), an application-specific integrated circuit (ASIC), a field programmable gate array (FPGA), or another programmable logic device, a discrete gate or a transistor logic device, a discrete hardware component, or the like. The general purpose processor may be a microprocessor, or the processor may be any conventional processor or the like.

The memory 630 may include a read-only memory and a random access memory, and provide an instruction and data to the processor 620. A part of the memory 630 may further include a non-volatile random access memory. For example, the memory 630 may further store information about a device type.

The bus 610 may further include a power bus, a control bus, a status signal bus, and the like, in addition to a data bus. However, for clear description, various types of buses in the figure are marked as the bus 610.

In an implementation process, steps in the foregoing methods can be implemented using a hardware integrated logical circuit in the processor 620, or using instructions in a form of software. The steps of the method disclosed with reference to the embodiments of the present invention may be directly performed by a hardware processor, or may be performed using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory 630, and the processor 620 reads information in the memory 630 and completes the steps in the foregoing methods in combination with hardware of the processor. To avoid repetition, details are not described herein again.

The network device 600 according to this embodiment of the present invention may be corresponding to the network device in the method in the embodiment of the present invention. In addition, units, namely, modules in the device 600 for transmitting a sounding reference signal, and the foregoing other operations and/or functions are separately intended to implement corresponding procedures performed by the network device in the method 200. For brevity, details are not described herein again.

Therefore, according to the network device in this embodiment of the present invention, the interval duration between the moment at which the terminal device receives the control signaling and the moment of completing preparation of the information necessary for sending the SRS is decreased to be less than 4 ms, so that the interval duration between the moment at which the terminal device receives the control signaling and the moment of sending the SRS is decreased, an aperiodic SRS is rapidly responded and sent, and a system latency is shortened effectively. This is especially important for sTTI-based transmission that has a relatively high latency requirement. In addition, the sTTI whose transmission time interval is relatively short is used to send the control signaling for a plurality of times in one subframe, thereby improving the system flexibility.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network side device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for transmitting a sounding reference signal SRS, wherein the method is applied to a communications system on which at least one sending time period is configured in time domain, the sending time period is a time period used to transmit a sounding reference signal SRS, and the method comprises:
receiving, by a terminal device, control signaling in a first time interval TI, wherein the control signaling is used to instruct the terminal device to send the SRS;
after receiving the control signaling, determining, by the terminal device, a target sending time period from the at least one sending time period, wherein the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, wherein 0<P≤4; and
sending, by the terminal device, the SRS in the target sending time period.

2. The method according to claim 1, wherein the first moment belongs to a second TI, there is an interval of L TIs between the start moment of the first TI and a start moment of the second TI, L is an integer greater than or equal to 0, and L is a predefined value, or L is configured using signaling.

3. The method according to claim 2, wherein the first TI comprises M symbols, the second TI comprises N symbols, 1≤M≤7, 1≤N≤7, M≤N, and M and N are positive integers.

4. The method according to claim 1, wherein there is an interval of K symbols between the first moment and a start moment of the symbol to carry the control signaling and that is in the first TI, K is a positive integer greater than or equal to 1, and K is a predefined value, or K is configured using signaling.

5. The method according to any one of claims 1 to 4, wherein the control signaling is carried in the first symbol of the first TI.

6. A method for transmitting a sounding reference signal SRS, wherein the method is applied to a communications system on which at least one sending time period is configured in time domain, the sending time period is a time period used to transmit a sounding reference signal SRS, and the method comprises:
sending, by a network device, control signaling in a first time interval TI, wherein the control signaling is used to instruct a terminal device to send the SRS; and
after sending the control signaling, receiving, by the network device, the SRS in a target sending time period, wherein the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, wherein 0<P≤4.

7. The method according to claim 6, wherein the first moment belongs to a second TI, there is an interval of L TIs between a start moment of the second TI and the start moment of the first TI, L is an integer greater than or equal to 0, and L is a predefined value, or L is configured using signaling.

8. The method according to claim 7, wherein the first TI comprises M symbols, the second TI comprises N symbols, 1≤M≤7, 1≤N≤7, M≤N, and M and N are positive integers.

9. The method according to claim 6, wherein there is an interval of K symbols between the first moment and a start moment of the symbol to carry the control signaling and that is in the first TI, K is a positive integer greater than or equal to 0, and K is a predefined value, or K is configured using signaling.

10. The method according to any one of claims 6 to 9, wherein the control signaling is carried in the first symbol of the first TI.

11. A terminal device, wherein the terminal device is applied to a communications system on which at least one sending time period is configured in time domain, the sending time period is a time period used to transmit a sounding reference signal SRS, and the terminal device comprises:
a receiving module, configured to receive control signaling in a first time interval TI, wherein the control signaling is used to instruct the terminal device to send the SRS;
a determining module, configured to: after the control signaling is received, determine a target sending time period from at least one sending time period, wherein the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, wherein 0<P≤4; and
a sending module, configured to send the SRS in the target sending time period determined by the determining module.

12. The terminal device according to claim 11, wherein the first moment belongs to a second TI, there is an interval of L TIs between the start moment of the first TI and a start moment of the second TI, L is an integer greater than or equal to 0, and L is a predefined value, or L is configured using signaling.

13. The terminal device according to claim 12, wherein the first TI comprises M symbols, the second TI comprises N symbols, 1≤M≤7, 1≤N≤7, M≤N, and M and N are positive integers.

14. The terminal device according to claim 11, wherein there is an interval of K symbols between the first moment and a start moment of the symbol to carry the control signaling and that is in the first TI, K is a positive integer greater than or equal to 1, and K is a predefined value, or K is configured using signaling.

15. The terminal device according to any one of claims 11 to 14, wherein the control signaling is carried in the first symbol of the first TI.

16. A network device for transmitting a sounding reference signal, wherein the network device is applied to a communications system on which at least one sending time period is configured in time domain, the sending time period is a time period used to transmit a sounding reference signal SRS, and the network device comprises:
a sending module, configured to send control signaling in a first time interval TI, wherein the control signaling is used to instruct a terminal device to send the SRS; and
a receiving module, configured to: after the control signaling is sent, receive the SRS in a target sending time period, wherein the target sending time period is a first sending time period, after a first moment, in the at least one sending time period, and interval duration between the first moment and a start moment of the first TI is less than P milliseconds, or interval duration between the first moment and a start moment of a symbol to carry the control signaling and that is in the first TI is less than P milliseconds, wherein 0<P≤4.

17. The network device according to claim 16, wherein the first moment belongs to a second TI, there is an interval of L TIs between a start moment of the second TI and the start moment of the first TI, L is an integer greater than or equal to 0, and L is a predefined value, or L is configured using signaling.

18. The network device according to claim 17, wherein the first TI comprises M symbols, the second TI comprises N symbols, 1≤M≤7, 1≤N≤7, M≤N, and M and N are positive integers.

19. The network device according to claim 16, wherein there is an interval of K symbols between the first moment and a start moment of the symbol to carry the control signaling and that is in the first TI, K is a positive integer greater than or equal to 1, and K is a predefined value, or K is configured using signaling.

20. The network device according to any one of claims 16 to 19, wherein the control signaling is carried in the first symbol of the first TI.
